# FASCICULE DE BREVET EUROPEEN

(11) **EP 1 946 642 B1**
(45) Date de publication et mention de la délivrance du brevet: **06.05.2009**
(21) Numéro de dépôt: 07291422.9
(22) Date de dépôt: 29.11.2007
(51) Int. Cl.: A23B 7/00, A23L 3/00

(54) **Procédé de traitement de fruits ou de légumes et installation correspondante**
Behandlungsverfahren für Obst oder Gemüse und entsprechende Anlage
Method for treating fruit or vegetables and corresponding facility

(30) Priorité: 07.12.2006 FR 0610691
(43) Date de publication de la demande: 23.07.2008
(73) Titulaire: XEDA INTERNATIONAL, 13670 Saint-Andiol (FR)
(72) Inventeur: Sardo, Alberto, 13160 Chateaurenard (FR)
(74) Mandataire: Domenego, Bertrand

(56) Documents cités:
- WO-A-03/007723
- US-A- 4 676 152

## Description

La présente invention concerne un procédé de traitement de fruits ou de légumes.

Il importe que les fruits et légumes ne perdent pas leurs qualités organoleptiques et conservent un aspect engageant lors de leur mise sur le marché pour une consommation rapide. Or, après leur récolte, les fruits et légumes sont couramment stockés pendant des périodes relativement longues avant d'être mis sur le marché. Les phénomènes susceptibles d'altérer l'aspect et le goût des fruits et légumes sont notamment la prolifération de champignons et de bactéries à leur surface. Ces détériorations sont encore plus rapides au niveau des micro-blessures et des entailles apparaissant sur la peau au cours du stockage ou de la manipulation des fruits et légumes. Un autre phénomène susceptible d'endommager les fruits et légumes est le phénomène d'échaudure qui se manifeste par un noircissement de la peau des fruits et légumes touchés.

On connaît divers traitements des fruits et des légumes, dont notamment la thermothérapie qui consiste en l'application d'une composition traitante chaude, par exemple de l'eau. D'autres traitements consistent par exemple en l'utilisation de compositions traitantes comprenant des fongicides tels que l'eugénol.

Les compositions traitantes précitées sont appliquées généralement sur les fruits et légumes par des méthodes classiques d'aspersion ou d'immersion, par exemple directement après la récolte, alors que les fruits ou légumes sont conditionnés en caisses ou en caisses/palettes, ces dernières ayant des dimensions beaucoup plus importantes que les simples caisses.

Cependant, on a constaté que les points de contact entre les fruits ou légumes ainsi conditionnés pouvaient ne pas être traités.

WO-03/007 723 décrit une solution à ce problème sous la forme d'un procédé de traitement dans lequel chaque caisse ou caisse/palette est immergée dans la composition traitante, puis animée d'un mouvement de va-et-vient afin de faire émerger une partie des fruits ou des légumes pour qu'ils se réagencent à l'intérieur de la caisse ou de la caisse/palette. Les points de contact entre les fruits ou les légumes sont ainsi modifiés et le traitement subi par ces derniers est plus homogène.

Ce procédé s'avère satisfaisant mais peu adapté au traitement des fruits ou des légumes conditionnés en des caisses de petites dimensions, car il nécessiterait de traiter individuellement chaque caisse ce qui serait long et fastidieux.

Un but de l'invention est de résoudre ce problème en proposant un procédé permettant de traiter plus rapidement et simplement des fruits ou des légumes, notamment lorsqu'ils sont conditionnés en caisses de petites dimensions.

A cet effet, l'invention a pour objet un procédé de traitement de fruits ou de légumes comprenant les étapes consistant à :
- réunir des moyens de conditionnement contenant les fruits ou légumes en un bloc sensiblement compact dans un logement délimité par une ceinture de parois latérales à l'intérieur d'une enceinte, les parois latérales s'étendant selon une direction longitudinale, au moins une des parois latérales étant déformable entre une configuration d'engagement et une configuration de libération du bloc,
- amener la ou chaque paroi latérale déformable dans sa configuration d'engagement du bloc, et
- faire traverser le logement longitudinalement par une composition traitante ayant une température comprise entre 30°C et 60°C, avec un débit compris entre 20 et 150m³/m²/h et pendant une durée comprise entre 10s et 10mn.

Selon des modes particuliers de réalisation, le procédé peut comprendre l'une ou plusieurs des caractéristiques suivantes, prise(s) isolément ou suivant toutes les combinaisons techniquement possibles :
- la température est supérieure à 40°C,
- la température est comprise entre 45°C et 55°C,
- la température est comprise entre 48°C et 52°C,
- le débit est compris entre 50 et 100 m³/m²/h,
- la durée est comprise entre 1 et 5 mn,
- la durée est comprise entre 2 et 3 mn,
- la composition traitante contient de l'acide phosphoreux,
- la concentration d'acide phosphoreux dans la composition traitante est comprise entre 200 ppm et 10 000 ppm,
- la concentration d'acide phosphoreux dans la composition traitante est comprise entre 500 ppm et 5000 ppm,
- la concentration d'acide phosphoreux dans la composition traitante est comprise entre 2000 et 4000 ppm,
- la composition traitante est appliquée à raison de 3000 à 10000 litres de composition traitante pour 100 à 300 tonne de fruits ou de légumes à traiter.

L'invention a également pour objet une installation comprenant pour la mise en oeuvre d'un procédé tel que défini ci-dessus :
- une enceinte comprenant une ceinture de parois latérales s'étendant selon une direction longitudinale, la ceinture délimitant à l'intérieur de l'enceinte un logement de réception des fruits ou de légumes à traiter, au moins une des parois latérales étant déformable entre une configuration d'engagement et une configuration de libération d'un chargement disposé à l'intérieur du logement,
- un dispositif d'alimentation de l'enceinte en composition traitante et d'évacuation de composition traitante hors de l'enceinte,
- des moyens de chauffage de la composition traitante, et
- un système de déformation des parois déformables.

Selon des modes particuliers de réalisation, l'installation peut comprendre l'une ou plusieurs des caractéristiques suivantes, prise(s) isolément ou suivant toutes les combinaisons techniquement possibles :
- le dispositif d'alimentation et d'évacuation comprend un distributeur de composition traitante disposé en amont de l'enceinte et un bac de recueil de la composition traitante disposé en aval de l'enceinte, et un circuit de recirculation pour envoyer la composition traitante du bac vers le distributeur,
- la ceinture comprend deux parois opposées non-déformables et deux parois opposées déformables,
- les parois déformables sont des parois gonflables,
- l'installation comprend en outre une composition traitante apte à traverser le logement longitudinalement pour traiter des fruits ou des légumes, et la composition traitante contient de l'acide phosphoreux,
- la concentration d'acide phosphoreux dans la composition traitante est comprise entre 200 ppm et 10 000 ppm,
- la concentration d'acide phosphoreux dans la composition traitante est comprise entre 500 ppm et 5000 ppm,
- la concentration d'acide phosphoreux dans la composition traitante est comprise entre 2000 et 4000 ppm,

L'invention sera mieux comprise à la lecture de la description qui va suivre, donnée uniquement à titre d'exemple, et faite en se référant aux dessins annexés, sur lesquels :
- la figure 1 est une vue schématique de face d'une installation selon l'invention, et
- la figure 2 est une vue schématique latérale de l'installation de la figure 1.

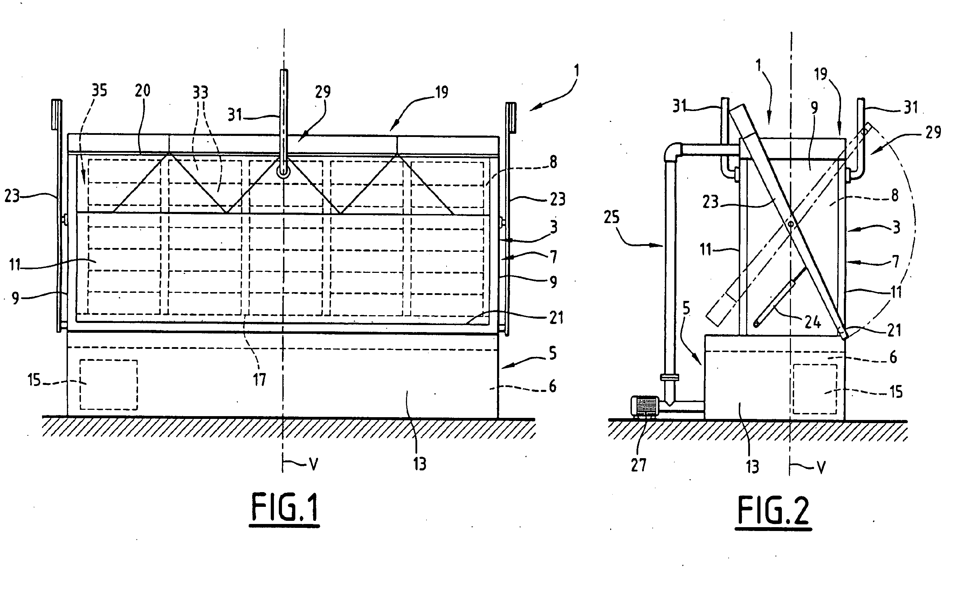

L'installation 1 de traitement de fruits ou de légumes des figures 1 et 2 comprend principalement une enceinte 3 et un dispositif 5 d'alimentation de l'enceinte 3 en composition traitante 6 et d'évacuation de la composition traitante 6 de l'enceinte 3.

L'enceinte 3 comprend une ceinture de parois latérales 7 qui s'étendent longitudinalement le long de la direction verticale matérialisée par la ligne V sur les figures 1 et 2. La ceinture 7 est ouverte à ses extrémités supérieure et inférieure. Elle délimite à l'intérieur de l'enceinte 3 un logement 8 de réception des fruits ou légumes à traiter.

Dans l'exemple représenté, la ceinture 7 a une section transversale rectangulaire mais d'autres formes sont bien entendu envisageables.

Deux parois latérales opposées 9, qui correspondent aux petits côtés de la section transversale de la ceinture 7, sont rigides et sont par exemple constituées de tôles métalliques. Les deux autres parois opposées 11 sont des parois chacune déformable entre une configuration d'engagement et une configuration de libération d'un chargement disposé à l'intérieur du logement 8.

Les parois 11 sont dans l'exemple de réalisation des parois gonflables. La paroi 11 située à l'arrière sur la figure 1, et qui n'est donc pas visible, comprend une face extérieure rigide et une face intérieure souple, par exemple réalisée en polyester. Le gonflement de cette paroi 11 et son passage en configuration d'engagement sont assurés en introduisant de l'air entre ses faces, ce qui conduit la face intérieure à venir se plaquer contre le chargement disposé à l'intérieur du logement 8, comme cela sera décrit par la suite.

La paroi 11 située en avant sur la figure 1 comprend une face externe souple et une face interne souple, par exemple réalisées en polyester. L'ensemble de la paroi 11 avant est donc souple. Ici encore, l'introduction d'air entre les deux faces conduit au gonflement de la paroi 11 avant, et donc à son passage en configuration d'engagement, la face intérieure venant alors se plaquer contre le chargement disposé à l'intérieur du logement 8.

Le dispositif 5 comprend un bac 13 de recueil de la composition traitante 6, ce bac 13 contenant des moyens 15 de chauffage, par exemple sous forme d'un échangeur de chaleur. Le niveau de la composition traitante 6 dans le bac 13 est matérialisé en pointillés sur les figures 1 et 2.

Le bac 13 est disposé sous l'enceinte 3 et un fond 17 de support des fruits ou des légumes est disposé entre l'enceinte 3 et le bac 13. Ce fond 17 est suffisamment ajouré pour pouvoir être traversé par le flux de composition traitante 6 qui sera décrit par la suite, sans introduire de pertes de charge significatives.

Dans l'exemple représenté, le bac 13 a des dimensions transversales supérieures à celles de la ceinture 7.

Le dispositif 5 comprend en outre un distributeur 19 de composition traitante 6 qui surmonte l'enceinte 3 et qui a des dimensions transversales analogues à celles de la ceinture 7 pour pouvoir répartir la composition traitante 6 sensiblement sur toute la superficie de la section transversale de la ceinture 7.

L'enceinte 3 est donc enserrée entre le distributeur 19 et le bac 13. Le distributeur 19 ferme ainsi l'extrémité supérieure de la ceinture 7 et le bac 13 ferme l'extrémité inférieure de la ceinture 7.

La face externe de la paroi 11 arrière est fixée aux parois 9, au bac 13 et au distributeur 19.

Le bord supérieur 20 de la paroi 11 avant est fixé sur le distributeur 19. Le bord inférieur 21 de la paroi 11 avant est relié à deux bras pivotants 23 montés sur les parois latérales 9. Comme illustré par la figure 2, les bras 23 peuvent pivoter sous l'action de vérins 24, entre une position soulevée (en traits mixtes), position dans laquelle le bord 21 de la paroi avant 11 est soulevé pour permettre l'accès à l'intérieur de l'enceinte 3, et une position abaissée, dans laquelle le bord 21 de la paroi avant 11 est abaissé et disposé à proximité du bac 13 pour empêcher l'accès à l'intérieur de l'enceinte 3.

Le dispositif 5 comprend entre le bac 13 et le distributeur 19 un circuit 25 de recirculation de la composition traitante 6 qui comprend par exemple une pompe 27 pour renvoyer la composition traitante depuis le bac 13 vers le distributeur 19 pour qu'elle alimente l'enceinte 3 avec un débit prédéterminé décrit ultérieurement.

L'installation 1 comprend en outre un système 29 de gonflage des parois 11 qui comprend des conduites 31 de canalisation d'air comprimé qui débouchent à l'intérieur des parois 11. Seule la conduite 31 associée à la paroi avant est visible sur la figure 1.

Pour traiter les fruits ou légumes dans l'installation 1, on procède par exemple comme décrit ci-dessous.

Les fruits ou légumes ont préalablement été placés à l'intérieur de moyens de conditionnement, tels que des caisses ou des caisses/palettes.

Dans la suite de la description, on considèrera que les fruits ou légumes sont conditionnés dans des caisses de petites dimensions mais l'invention s'applique également lorsque les fruits ou légumes sont conditionnés en caisses/palettes ou d'autres moyens.

On soulève la paroi 11 avant puis on charge les caisses 33 dans le logement 8 à l'intérieur de l'enceinte 3.

Plus précisément, on réunit les caisses 33 à l'intérieur de l'enceinte 3 en les agglomérant sous forme d'un bloc sensiblement compact 35 qui repose sur le fond 17 et qui remplit sensiblement tout le logement 8.

Dans l'exemple représenté, le bloc 35 comprend cinq piles de sept caisses 33. Ces jeux ont été exagérés sur la figure 1.

Les piles de caisses 33 sont disposées à proximité des parois 9 et 11, des faibles jeux pouvant être ménagées entre les piles de caisses 33 et les parois 9 et 11 ou entre les piles de caisses 33.

A l'issue du chargement, la paroi 11 avant est abaissée. Son bord inférieur 21 peut être alors fixé au bac 13 et/ou les bras pivotants 23 bloqués en position.

On gonfle alors grâce au système 29 les parois 11. Les faces intérieures des parois 11 viennent alors se plaquer contre le bloc 35 et épouser son contour extérieur, de sorte que la ceinture 7 forme un passage qui entoure avec un jeu réduit le bloc 35 pour y canaliser efficacement la composition traitante 6 qui va être mise en circulation par le dispositif 5. Cette fonction de canalisation s'avère suffisamment remplie, même si les parois 9 sont non-déformables et ne se plaquent donc pas contre le bloc 35.

La composition traitante 6 va alors être introduite dans l'enceinte 3 par le distributeur 19, puis traverser le logement 8 longitudinalement de haut en bas avant d'être recueillie par le bac 13. Au cours de sa traversée du logement 8, la composition traitante 6 va baigner les fruits ou légumes et traverser successivement tous les fonds des caisses 33.

Grâce à la canalisation assurée par la ceinture 7 autour du bloc 35, les écoulements latéraux de la composition traitante 6 hors du bloc 35 sont réduits.

Le débit de composition traitante 6 au travers du logement 8 est compris entre 20m³/m²/h et 150m³/m²/h. La durée de traitement, c'est-à-dire la durée pendant laquelle la composition traitante 6 doit circuler à l'intérieur du logement 8 est comprise entre 10s et 10 mn, et la température de la composition traitante 6 doit être comprise entre 30°C et 60°C.

La combinaison de la ceinture de parois 7 qui canalise la composition traitante 6, du débit important de composition traitante 6 et de la faible durée de traitement permet d'atteindre un traitement particulièrement homogène des fruits ou légumes, même au sein des couches inférieures des fruits ou légumes, notamment celles situées au voisinage des fonds des caisses 33 les plus inférieures.

De manière plus générale :
- la température de la composition traitante 6 peut être comprise entre 40 et 60°C, de préférence encore entre 45°C et 55°C, de manière encore préférée entre 48 et 52°C, par exemple 50°C,
- le débit peut être compris entre 50m³/m²/h et 100m³/m²/h, et
- la durée de traitement peut être comprise entre 1 et 5 mn, de manière préférentielle entre 2 et 3 mn.

En outre, le procédé permet de traiter simultanément un grand nombre de caisses 33 et s'avère donc particulièrement simple et rapide à mettre en oeuvre, même avec des caisses de petites dimensions.

De manière générale, d'autres formes d'enceinte 3 peuvent être envisagées et le nombre de parois 11 déformables peut également être différent de celui décrit précédemment. Ainsi, à titre d'exemple, une seule paroi déformable peut être prévue.

Le procédé décrit précédemment peut être utilisé avec tous types de compositions traitantes, y compris de l'eau ne contenant pas de composés actifs particuliers.

Le procédé décrit s'avère cependant particulièrement avantageux pour la mise en oeuvre de nouveaux traitements contenant la thermothérapie et l'utilisation de compositions particulières, notamment celles contenant de l'acide phosphonique comme décrit ci-dessous.

L'acide phosphonique (H-PO₃H₂) (AP) est aussi appelé acide phosphoreux (H₃PO₃). Ce composé a une activité fongicide similaire à celle du Fosetyl AI (éthylphosphonate d'aluminium). Ce composé, en effet, se dégrade en quelques heures dans les tissus des plantes en AP.

L'activité de l'AP est surtout connue sur les mildious (phycomycètes). En revanche, en ce qui concerne les ascomycètes et les champignons imparfaits parasites des fruits et légumes (*Fusarium spp., Botrytis sp.*, *Phlyctema sp.*, *Penicillium spp.*, etc.), l'AP a peu d'efficacité.

Des tentatives ont cependant été faites d'appliquer l'AP (ou le Fosetyl Al) en post-récolte. En effet, les limites maximales de résidu autorisées (LMR) (exprimés en AP) après traitement de culture sont proches de 50 ppm : on pourrait donc traiter en post- récolte avec des doses relativement élevées. A titre de comparaison, la LMR du Pyriméthanil est seulement (pour le moment) de 0,3 ppm.

Malheureusement, à température ambiante, notamment sur les *Penicilliums,* l'activité est très faible même à des doses de traitement proches de 10 000 ppm dans le cas des *Penicilliums* d'oranges.

De façon inattendue, les présents inventeurs ont combiné l'AP avec la thermothérapie, c'est-à-dire un traitement à l'eau chaude avec une température voisine de 50°C. Contre toute attente, les résultats ont été excellents en ce qu'ils démontrent une potentialisation de l'activité de l'AP.

Généralement, l'efficacité obtenue avec des doses réduites, jusqu'à 1/5 de la dose d'AP utilisée à température ambiante, est équivalente sinon supérieure. Globalement, les quantités de résidus sont diminuées.

Ainsi, la composition traitante comprendra de l'AP et sera appliqué à chaud. De préférence la température de la composition sera comprise entre 30° et 60°C, préférentiellement entre 40° et 60°C et encore plus préférentiellement entre 45° et 55°C, notamment entre 48° et 52°C, par exemple 50°C.

De manière générale, les concentrations d'acide phosphoreux dans la composition traitante seront comprises entre 200 ppm et 10 000 ppm, de préférence entre 500 ppm et 5000 ppm, plus préférentiellement entre 2000 et 4000 ppm.

La quantité de produit appliqué dépend de la quantité de fruits ou de légumes à traiter, ainsi que des conditions de stockage et le degré de maturité des fruits et légumes stockés et/ou souhaité. En général, on applique entre 3000 et 10000 litres de composition traitante aux concentrations indiquées ci-dessus, pour 100-300 tonnes de fruits ou de légumes à traiter.

Selon un autre aspect avantageux, la composition traitante comprend, outre l'acide phosphoreux, un autre fongicide. Préférentiellement, ledit fongicide est choisi parmi tout fongicide habituellement utilisé pour le traitement des fruits et légumes, notamment les fongicides appliqués en post-récolte. On peut notamment mentionner l'eugénol, l'isoeugénol ou l'un de leurs sels, le thiabendazole (TBZ), l'orthophénylphénol, l'imazalil ou le phosphite d'imazalil.

Selon un aspect préféré, le fongicide est présent aux concentrations normalement utilisées. Ainsi, l'eugénol peut être utilisé à des concentrations comprises entre 300 et 4500 ppm, l'imazalil à des concentrations comprises entre 100 et 1000 ppm, l'orthophénylphénol à des concentrations comprises entre 500 et 3000ppm, le TBZ à des concentrations comprises entre 100 et 1000ppm.

L'acide phosphoreux et le fongicide peuvent être appliqués simultanément ou séparément ou de façon séquencée dans le temps.

Les compositions traitantes et les combinaisons appliquées à chaud montrent des résultats synergiques sur un large spectre de souches, notamment les souches caractéristiques apparaissant en post-récolte, en particulier les *Penicilliums.* Par ailleurs, les combinaisons démontrent une activité significative sur des souches résistantes à l'acide phosphoreux.

On entend ici par "acide phosphoreux" (ou "acide phosphonique" ou "phosphite") tout composé permettant la libération de l'ion phosphite H₂PO3⁻. On peut ainsi citer l'acide phosphonique (ou HPO₃H₂), l'acide phosphoreux (H₃PO₃) ou encore le phosphite de potassium, phosphite de sodium, phosphite d'ammonium ou phosphite de magnésium.

Les compositions traitantes peuvent également comprendre tout additif habituellement utilisé, notamment pour le traitement des fruits et légumes.

Les exemples suivants sont donnés à titre illustratif et non limitatif.

### 1 - Etude in vitro de l'activité de l'acide phosphonique sur le P. expansum

Comme le montre le tableau 1, l'activité de l'AP à température ambiante est partielle même à 4000 ppm.

La combinaison avec la thermothérapie renforce considérablement l'efficacité, même à 1000 ppm.

**Tableau 1 : Efficacité de l'AP (sous forme de « Kphos ») sur la germination des spores du P. expansum (22°C)**

| Traitement | Spores germées | |
|---|---|---|
| | 24 heures | 48 heures |
| Contrôle | 100 a | 100 a |
| Contrôle 50°C, 2min | 85 a | 93 a |
| Ac. Phosphonique 1000 ppm | 27 b | 34 b |
| Ac. Phosphonique 4000 ppm | 11 c | 11 c |
| Ac. Phosphonique 1000 ppm 50° 2 min | 0 d | 21 c |
| Ac. Phosphonique 4000 ppm 50° 2 min | 0 d | 0 c |
| Les valeurs suivies d'une même lettre ne sont pas statistiquement différentes (test Student P = 0.05) | | |

| | | |
|---|---|---|
| Kphos = acide phosphonique neutralisé par KOH (pH 6.5). | | |

### 2 - Etude in vivo de l'activité de l'acide phosphonique (Kphos) sur des infections de P. expansum sur pommes

**Tableau 2 : Efficacité de l'AP (sous forme de « Kphos ») sur l'évolution des infections naturelles causées par P. expansum sur pommes Elstar biologiques (2°C)**

| | % pommes avec symptômes | | | |
|---|---|---|---|---|
| * nombre de jours après le traitement | 2001 - 2002 * | | 2002 - 2003 * | |
| Traitement | 90 jours | 180 jours | 90 jours | 180 jours |
| Contrôle | 4.6 a | 15.6 a | 6.0 a | 16.5 a |
| Contrôle 50°C 2min | 4.2 a | 15.3 a | 5.6 a | 15.5 a |
| AP 1000 ppm | 3.1 a | 13.1 a | 4.9 a | 11.1 a |
| AP1000ppm-50°C 2 min | 0.0 b | 4.7 b | 0.0 b | 6.3 c |
| Références chimiques | | | | |
| Pyriméthanil 250 ppm | 4.1 a | 16.2 a | 4.0 a | 19.0 a |
| Pyriméthanil 500 ppm | 3.2 a | 21.3 a | 0.0 a | 14.0 a |
| Fluidoxonil 200 ppm | 1.1 b | 4.9 b | 4.0 a | 7.0 c |
| Traitements effectués après 26 jours de conservation à 2°C | | | | |

Dans cette expérimentation, étant donné la faible activité *in vitro* de l'AP à température ambiante sur *P. expansum,* il n'est pas surprenant de retrouver le même phénomène *in vivo,* soit une activité proche de 0.

En revanche, en combinaison avec la thermothérapie, l'efficacité est comparable voire supérieure à celle des meilleurs fongicides synthétiques actuellement disponibles.

### 3 - Efficacité de l'AP et de la thermothérapie sur les infections à P. digitatum sur oranges

**Tableau 3 : Activité de l'AP en combinaison avec le Bioxeda et la thermothérapie sur oranges Navel**

| Traitements | Oranges avec symptômes | |
|---|---|---|
| | 9 jours | 18 jours |
| Contrôle | 95% a | 100 % a |
| Contrôle 48°C 2 min | 45% b | 83% b |
| Bioxeda (1) 48°C 2 min | 4 % b | 60 % b |
| Bioxeda + AP (2) 48°C 2 min | 0 % b | 26 % c |
| | | |

| | | |
|---|---|---|
| 1- Bioxeda, matière active : eugénol 1,8 g/L 2- AP 1000 ppm (« Kphos ») | | |

Dans cette expérimentation, les oranges ont été blessées puis inoculées par le *P. Digitatum* (500 000 sp/mL) et traitées 15 heures plus tard ; la conservation s'effectue à 5°C.

On remarque l'effet complémentaire de l'AP à 9 jours et surtout à 18 jours, où le taux de pourritures est divisé par 2,3 en présence de l'AP (26 % au Bioxeda 60 % et 100 % dans le témoin).

### 4 - Efficacité de l'AP sur les infections à P. digitatum sur oranges. Comparaison avec un mélange de trois fongicides. Tous les traitements sont combinés à la thermothérapie

**Tableau 4 : Efficacité de l'AP combiné avec la thermothérapie sur P. digitatum (orange Navel). Comparaison.**

| Traitements | Nombre de fruits | Oranges avec symptômes 12 J 5°C + 3 J SPC (1) |
|---|---|---|
| Contrôle | 200 | 9,0 a |
| Thermothérapie | | |
| + Imazalil 400 ppm | 300 | 1.0b |
| + TBZ 450 ppm | | |
| + OPP 1500 ppm | | |
| Thermothérapie + acide phosphonique 2000 ppm | 200 | 0.5 b |

| | | |
|---|---|---|
| (1) SPC: Simulation de période de commercialisation soit 3 jours à température ambiante. TBZ : thiabendazole OPP : orthophénylphénol. | | |

Comme le montre le tableau 4 cette fois sur infections naturelles, l'AP se montre supérieur ou équivalent au traitement appliqué avec trois fongicides habituellement utilisés dans le cas des pourritures à *Penicillium* sur oranges.

### 5 - Efficacité de l'AP sur les infections naturelles à P. digitatum sur oranges, combiné avec la thermothérapie

Une nouvelle expérimentation réalisée dans les conditions très proches de la pratique a été réalisée : infections naturelles, conservation au froid, simulation de périodes de conservation (SPC).

**Tableau 5 : Efficacité de l'acide phosphonique combiné à la thermothérapie sur P. digitatum des oranges (Navel).**

| Traitements | Nombre de fruits | % d'oranges avec symptômes 15 J 5°C + 5 J SPC |
|---|---|---|
| Témoin | 600 | 10.2 % |
| Thermothérapie 50°C 3 min | 400 | 6.5 % |
| AP 2000 ppm | 400 | 6.0% |
| AP 4000 ppm | 400 | 5.1 % |
| Thermothérapie + AP 2000 ppm | 300 | 4.0 % |
| Thermothérapie + AP 4000 ppm | 300 | 2.7 % |

Le tableau montre une excellente efficacité de l'AP, notamment à 4000 ppm combiné à la thermothérapie (73,5%). Aucun phénomène de phytotoxicité n'a été trouvé, ce qui laisse supposer qu'une augmentation de la concentration, donc de l'efficacité, est encore possible. Avec une solution résiduelle sur les fruits de 1,5 I/tonne à 4000ppm soit 6 g/tonne, le taux de résidus théorique, environ 6 ppm serait très faible pour cette molécule. La LMR étant de 50 ppm on pourra envisager une augmentation de la dose si nécessaire.

### Conclusion :

Ces différentes expérimentations montrent que la thermothérapie potentialise de façon synergique l'effet fongicide de l'AP. On notera que les fongicides actuellement utilisés génèrent des souches dotées d'un haut niveau de résistance qui conduit à l'impuissance face aux infections (cas du thiabendazole, du carbendazime et de l'imazalil principalement). Or, il n'y a pas de phénomène de résistance acquise à l'AP.

### 6 - Activité des combinaisons de fongicides avec l'AP

### 6.1. AP/eugénol

Des oranges Washington inoculées au *Penicillium digitatum* ont été mises en contact avec une solution d'eugénol/phosphite de potassium contenant 1100 ppm d'eugénol et 1600 ppm de phosphite de potassium pendant un temps de contact de 2 minutes, à 38° et 48°C. Les fruits traités ont été maintenus à 7°C puis examinés après 9 et 18 jours. Ils ont été comparés avec des fruits traités avec l'eugénol seul aux mêmes conditions et des fruits inoculés non traités.

Le tableau ci-après indique les pourcentages de fruits pourris :

| | Après 9 jours | Après 18 jours |
|---|---|---|
| 38°C Témoin | 95 | 100 |
| 48°C Témoin | 68 | 90 |
| 38°C Eugénol | 12 | 73 |
| 48°C Eugénol | 4 | 60 |
| 38°C Phosphite de potassium | 14 | 76 |
| 48°C Phosphite de potassium | 3 | 44 |
| 38°C Eugénol / Phosphite de Potassium | 11 | 68 |
| 48°C Eugénol / Phosphite de Potassium | 0 | 26 |

Ces résultats montrent qu'il y a un effet certain de l'augmentation de la température sur l'activité de l'eugénol et surtout que cette activité progresse fortement en présence du phosphite aux mêmes doses et temps de contact.

### 6.2. AP/Imazalil

Des oranges Valencia inoculées avec une souche de *Penicillium digitatum* résistante à l'Imazalil ont été traitées à 52°C avec un temps de contact de 2 minutes avec :
- 300 ppm Imazalil ;
- 3000 ppm phosphite de potassium ;
- les deux produits mélangés à 300 ppm Imazalil et 3000 ppm phosphite de potassium.

Les résultats sont illustrés dans le tableau suivant :

| Traitements | N° d' essai | Nombre de fruits | | % de fruits pourris | % moyen de fruits pourris |
|---|---|---|---|---|---|
| | | pourris | intacts | | |
| Inoculés | 1 | 10 | 0 | 100 | **100** |
| | 2 | 10 | 0 | 100 | |
| | 3 | 10 | 0 | 100 | |
| | 4 | 10 | 0 | 100 | |
| Témoin 52°C | 1 | 7 | 3 | 70 | **85** |
| | 2 | 9 | 1 | 90 | |
| | 3 | 9 | 1 | 90 | |
| | 4 | 7 | 3 | 70 | |
| Phosphite de potassium 52°C | 1 | 5 | 5 | 50 | **42,5** |
| | 2 | 6 | 4 | 60 | |
| | 3 | 3 | 7 | 30 | |
| | 4 | 3 | 7 | 30 | |
| Imazalil 52°C | 1 | 2 | 8 | 20 | **42,5** |
| | 2 | 7 | 3 | 70 | |
| | 3 | 3 | 7 | 30 | |
| | 4 | 5 | 5 | 50 | |
| Phosphite de calcium + Imazalil 52°C | 1 | 2 | 8 | 20 | **10** |
| | 2 | 2 | 8 | 20 | |
| | 3 | 0 | 10 | 0 | |
| | 4 | 0 | 10 | 0 | |

Comme il apparaît du tableau ci-dessus, chaque produit appliqué individuellement divise par 2 le taux de pourriture (42,5% contre 85%), tandis que la combinaison des deux produits divise le taux de pourriture par 8,5.

Ces résultats démontrent nettement l'effet synergique des combinaisons de l'AP avec des fongicides.

De manière générale, les compositions à base d'AP décrites ci-dessus peuvent être appliquées avec des installations autres que celle décrite par référence aux figures 1 et 2. Ainsi on peut, à titre d'exemple, utiliser l'installation décrite dans le document WO-03/007 723.

## Revendications

1. Procédé de traitement de fruits ou de légumes comprenant les étapes consistant à :
- réunir des moyens (33) de conditionnement contenant les fruits ou légumes en un bloc (35) sensiblement compact dans un logement (8) délimité par une ceinture (7) de parois latérales (9, 11) à l'intérieur d'une enceinte (3), les parois latérales (9, 11) s'étendant selon une direction longitudinale (V), au moins une (11) des parois latérales étant déformable entre une configuration d'engagement et une configuration de libération du bloc (35),
- amener la ou chaque paroi latérale déformable (11) dans sa configuration d'engagement du bloc (35), et
- faire traverser le logement (8) longitudinalement par une composition traitante (6) ayant une température comprise entre 30°C et 60°C, avec un débit compris entre 20 et 150m³/m²/h et pendant une durée comprise entre 10s et 10mn:

2. Procédé selon la revendication 1, dans lequel la température est supérieure à 40°C.

3. Procédé selon la revendication 2, dans lequel la température est comprise entre 45°C et 55°C.

4. Procédé selon la revendication 3, dans lequel la température est comprise entre 48°C et 52°C.

5. Procédé selon l'une des revendications précédentes, dans lequel le débit est compris entre 50 et 100 m³/m²/h.

6. Procédé selon l'une des revendications précédentes, dans lequel la durée est comprise entre 1 et 5 mn.

7. Procédé selon la revendication 6, dans lequel la durée est comprise entre 2 et 3 mn.

8. Procédé selon l'une des revendications précédentes, dans lequel la composition traitante (6) contient de l'acide phosphoreux.

9. Procédé selon la revendication 8, dans lequel la concentration d'acide phosphoreux dans la composition traitante (6) est comprise entre 200 ppm et 10 000 ppm.

10. Procédé selon la revendication 9, dans lequel la concentration d'acide phosphoreux dans la composition traitante (6) est comprise entre 500 ppm et 5000 ppm.

11. Procédé selon la revendication 10, dans lequel la concentration d'acide phosphoreux dans la composition traitante (6) est comprise entre 2000 et 4000 ppm.

12. Procédé selon l'une quelconque des revendications 8 à 11, dans lequel la composition traitante (6) est appliquée à raison de 3000 à 10000 litres de composition traitante (6) pour 100 à 300 tonne de fruits ou de légumes à traiter.

13. Installation pour la mise en oeuvre d'un procédé selon l'une des revendications précédentes, **caractérisée en ce qu'**elle comprend :
- une enceinte (3) comprenant une ceinture (7) de parois latérales (9, 11) s'étendant selon une direction longitudinale, la ceinture (7) délimitant à l'intérieur de l'enceinte (3) un logement (8) de réception des fruits ou de légumes à traiter, au moins une (11) des parois latérales étant déformable entre une configuration d'engagement et une configuration de libération d'un chargement (35) disposé à l'intérieur du logement (8),
- un dispositif (5) d'alimentation de l'enceinte (3) en composition traitante (6) et d'évacuation de composition traitante (6) hors de l'enceinte (3),
- des moyens (15) de chauffage de la composition traitante (6), et
- un système (29) de déformation des parois déformables (11).

14. Installation selon la revendication 13, **caractérisée en ce que** le dispositif d'alimentation et d'évacuation (5) comprend un distributeur (19) de composition traitante (6) disposé en amont de l'enceinte (3) et un bac de recueil (13) de la composition traitante (6) disposé en aval de l'enceinte (3), et un circuit de recirculation (25) pour envoyer la composition traitante du bac (13) vers le distributeur (19).

15. Installation selon la revendication 13 ou 14, **caractérisée en ce que** la ceinture (7) comprend deux parois opposées non-déformables (9) et deux parois opposées déformables (11).

16. Installation selon l'une des revendications 13 à 15, **caractérisée en ce que** les parois déformables (11) sont des parois gonflables.

17. Installation selon l'une des revendications 13 à 16, **caractérisée en ce qu'**elle comprend en outre une composition traitante (6) apte à traverser le logement (8) longitudinalement pour traiter des fruits ou des légumes, et **en ce que** la composition traitante contient de l'acide phosphoreux.

18. Installation selon la revendication 17, **caractérisée en ce que** la concentration d'acide phosphoreux dans la composition traitante (6) est comprise entre 200 ppm et 10 000 ppm.

19. Installation selon la revendication 18, **caractérisée en ce que** la concentration d'acide phosphoreux dans la composition traitante (6) est comprise entre 500 ppm et 5000 ppm.

20. Installation selon la revendication 19, **caractérisée en ce que** la concentration d'acide phosphoreux dans la composition traitante (6) est comprise entre 2000 et 4000 ppm.

## Claims

1. Method for treating fruits and vegetables comprising the following steps:
• assembling packing means (33) containing fruits or vegetables together into a substantially compact block (35) in a receptacle (8) delimited by a boundary (7) of side walls (9, 11) inside an enclosure (3), wherein the side walls (9, 11) extend in a longitudinal direction (V) and at least one (11) of the side walls is deformable between an engagement configuration and a release configuration of the block (35),
• bringing the or each deformable side wall (11) into its engagement configuration of the block (35), and
• passing a treatment composition (6) longitudinally through the receptacle (8) with a temperature of between 30°C and 60°C, with a flow rate of between 20 and 150 m³/m²/h and for a period of between 10 sec. and 10 min.

2. Method according to claim 1, wherein the temperature is higher than 40°C.

3. Method according to claim 2, wherein the temperature amounts to between 45°C and 55°C.

4. Method according to claim 3, wherein the temperature amounts to between 48°C and 52°C.

5. Method according to one of the preceding claims, wherein the flow rate amounts to between 50 and 100 m³/m²/h.

6. Method according to one of the preceding claims, wherein the period amounts to between 1 and 5 min.

7. Method according to claim 6, wherein the period amounts to between 2 and 3 min.

8. Method according to one of the preceding claims, wherein the treatment composition (6) contains phosphorous acid.

9. Method according to claim 8, wherein the concentration of the phosphorous acid in the treatment composition (6) amounts to between 200 ppm and 10 000 ppm.

10. Method according to claim 9, wherein the concentration of the phosphorous acid in the treatment composition (6) amounts to between 500 ppm and 5000 ppm.

11. Method according to claim 10, wherein the concentration of the phosphorous acid in the treatment composition (6) amounts to between 2000 ppm and 4000 ppm.

12. Method according to any one of claims 8 to 11, wherein the treatment composition (6) is applied at a rate of 3000 to 10 000 litres of treatment composition (6) per 100 to 300 tonnes of fruits or vegetables to be treated.

13. Installation for implementing the method according to one of the preceding claims, **characterised in that** it comprises:
• an enclosure (3) comprising a boundary (7) of side walls (9, 11) extending in a longitudinal direction, wherein on the inside of the enclosure (3) the boundary (7) delimits a receptacle (8) for the fruits or vegetables to be treated and at least one (11) of the side walls is deformable between a configuration for engagement and a configuration for release of a load (35) disposed inside the receptacle (8),
• a device (5) for supplying treatment composition (6) to the enclosure (3) and for discharging treatment composition (6) out of the enclosure (3),
• means (15) for heating the treatment composition (6), and
• a system (29) for deforming the deformable walls (11).

14. Installation according to claim 13, **characterised in that** the supply and discharge device (5) comprises a distributor (19) for the treatment composition (6) disposed upstream of the enclosure (3) and a collection tank (13) for the treatment composition (6) disposed downstream of the enclosure (3), and a recirculation circuit (25) for moving the treatment composition from the tank (13) towards the distributor (19).

15. Installation according to claim 13 or 14, **characterised in that** the boundary (7) comprises two opposing non-deformable walls (9) and two opposing deformable walls (11).

16. Installation according to one of claims 13 to 15, **characterised in that** the deformable walls (11) are inflatable walls.

17. Installation according to one of claims 13 to 16, **characterised in that** it additionally comprises a treatment composition (6) suitable for passing longitudinally through the receptacle (8) to treat fruits or vegetables, and **in that** the treatment composition contains phosphorous acid.

18. Installation according to claim 17, **characterised in that** the concentration of the phosphorous acid in the treatment composition (6) amounts to between 200 ppm and 10 000 ppm.

19. Installation according to claim 18, **characterised in that** the concentration of the phosphorous acid in the treatment composition (6) amounts to between 500 ppm and 5000 ppm.

20. Installation according to claim 19, **characterised in that** the concentration of the phosphorous acid in the treatment composition (6) amounts to between 2000 ppm and 4000 ppm.

## Patentansprüche

1. Verfahren zur Behandlung von Obst oder Gemüse, die folgenden Schritte aufweisend:
- Zusammenführen der das Obst oder Gemüse enthaltenden Behandlungsmittel (33) in einen im Wesentlichen kompakten Block (35) in einem Aufnahmeraum (8), der durch einen Gürtel (7) von Seitenwänden (9, 11) innerhalb einer Umfassung (3) begrenzt wird, wobei sich die Seitenwände (9, 11) entlang einer Längsrichtung (V) erstrecken, wobei mindestens eine (11) der Seitenwände zwischen einer Eingriffskonfiguration und einer Freigabekonfiguration des Blocks (35) verformbar ist,
- Bringen der oder jeder verformbaren Seitenwand (11) in ihre Eingriffskonfiguration des Blocks (35), und
- Durchströmenlassen der Aufnahme (8) in Längsrichtung mit einer Behandlungszusammensetzung (6), die eine Temperatur zwischen 30°C und 60°C hat, mit einem Durchsatz, der zwischen 20 m³/m²/h und 150 m³/m²/h liegt, und während einer Dauer von zwischen 10 Sekunden und 10 Minuten.

2. Verfahren gemäß Anspruch 1, wobei die Temperatur höher als 40°C ist.

3. Verfahren gemäß Anspruch 2, wobei die Temperatur zwischen 45°C und 55°C liegt.

4. Verfahren gemäß Anspruch 3, wobei die Temperatur zwischen 48°C und 52°C liegt.

5. Verfahren gemäß einem der vorhergehenden Ansprüche, wobei der Durchsatz zwischen 50 m³/m²/h und 100 m³/m²/h liegt.

6. Verfahren gemäß einem der vorhergehenden Ansprüche, wobei die Dauer zwischen 1 Minute und 5 Minuten liegt.

7. Verfahren gemäß Anspruch 6, wobei die Dauer zwischen 2 und 3 Minuten liegt.

8. Verfahren gemäß einem der vorhergehenden Ansprüche, wobei die Behandlungszusammensetzung (6) phosphorige Säure enthält.

9. Verfahren gemäß Anspruch 8, wobei die Konzentration von phosphoriger Säure in der Behandlungszusammensetzung (6) zwischen 200 ppm und 10 000 ppm liegt.

10. Verfahren gemäß Anspruch 9, wobei die Konzentration von phosphoriger Säure in der Behandlungszusammensetzung (6) zwischen 500 ppm und 5000 ppm liegt.

11. Verfahren gemäß Anspruch 10, wobei die Konzentration von phosphoriger Säure in der Behandlungsammensetzung (6) zwischen 2000 ppm und 4000 ppm liegt.

12. Verfahren gemäß einem der Ansprüche 8 bis 11, wobei die Behandlungszusammensetzung (6) in einer Menge von 3000 bis 10000 Liter Behandlungszusammensetzung (6) für 100 bis 300 Tonnen von zu behandelndem Obst oder Gemüse angewendet wird.

13. Anlage für die Durchführung des Verfahrens gemäß einem der vorhergehenden Ansprüche, **dadurch gekennzeichnet, dass** sie aufweist:
- eine Umfassung (3), die einen Gürtel (7) aus Seitenwänden (9, 11) aufweist, die sich entlang einer Längsrichtung erstrecken, wobei der Gürtel (7) im Inneren der Umfassung (3) einen Aufnahmeraum (8) zum Aufnehmen von zu behandelndem Obst oder Gemüse begrenzt, wobei mindestens eine (11) der Seitenwände zwischen einer Eingriffskonfiguration und einer Freigabekonfiguration einer Ladung (35) verformbar ist, die im Inneren der Aufnahme (8) positioniert ist,
- eine Vorrichtung (5) für das Einspeisen von Behandlungszusammensetzung (6) in die Umfassung (3) und für das Ableiten von Behandlungszusammensetzung (6) aus der Umfassung (3),
- Mittel (15) zum Erhitzen der Behandlungszusammensetzung (6), und
- ein System (29) zum Verformen der verformbaren Wände (11).

14. Anlage gemäß Anspruch 13, **dadurch gekennzeichnet, dass** die Vorrichtung zum Einspeisen und Ableiten (5) aufweist: einen Verteiler (19) von Behandlungszusammensetzung (6), der stromaufwärts von der Umfassung (3) angeordnet ist, und einen Behälter (13) zum Sammeln der Behandlungszusammensetzung (6), der stromabwärts von der Umfassung (3) angeordnet ist, und eine Rückführungsleitung (25) zum Leiten der Behandlungszusammensetzung von dem Behälter (13) in Richtung zu dem Verteiler (19).

15. Anlage gemäß Anspruch 13 oder 14, **dadurch gekennzeichnet, dass** der Gürtel (7) zwei gegenüberliegende nicht verformbare Wände (9) und zwei gegenüberliegende verformbare Wände (11) aufweist.

16. Anlage gemäß einem der Ansprüche 13 bis 15, **dadurch gekennzeichnet, dass** die verformbaren Wände (11) aufblasbare Wände sind.

17. Anlage gemäß einem der Ansprüche 13 bis 16, **dadurch gekennzeichnet, dass** sie ferner eine Behandlungszusammensetzung (6) aufweist, die zum Durchqueren des Aufnahmeraums (8) in Längsrichtung zum Behandeln des Obstes oder des Gemüses geeignet ist, und dass die Behandlungszusammensetzung phosphorige Säure aufweist.

18. Anlage gemäß Anspruch 17, **dadurch gekennzeichnet, dass** die Konzentration von phosphoriger Säure in der Behandlungszusammensetzung (6) zwischen 200 ppm und 10 000 ppm liegt.

19. Anlage gemäß Anspruch 18, **dadurch gekennzeichnet, dass** die Konzentration von phosphoriger Säure in der Behandlungszusammensetzung (6) zwischen 500 ppm und 5000 ppm liegt.

20. Anlage gemäß Anspruch 19, **dadurch gekennzeichnet, dass** die Konzentration von phosphoriger Säure in der Behandlungszusammensetzung (6) zwischen 2000 ppm und 4000 ppm liegt.
